# EUROPEAN PATENT SPECIFICATION

(11) **EP 2 072 942 B1**
(45) Date of publication and mention of the grant of the patent: **20.04.2011**
(21) Application number: 07425810.4
(22) Date of filing: 20.12.2007
(51) Int. Cl.: F41B 7/04

(54) **Underwater gun powered by elastic elements**
Unterwasserharpune mit elastischen Elementen
Fusil sous marin comprenant des éléments élastiques

(43) Date of publication of application: 24.06.2009
(73) Proprietor: Miele, Carlo, 20135 Milano (IT)
(72) Inventor: Miele, Carlo, 20135 Milano (IT)
(74) Representative: Valentini, Giuliano

(56) References cited:
- WO-A-02/052932
- FR-A- 883 289
- FR-A- 891 686
- FR-A- 984 588
- FR-A- 2 239 198
- FR-A- 2 899 060
- GR-A- 90 100 764

## Description

The present invention relates to an underwater gun powered by elastic elements, also known with the name of "arbalète".

In this type of underwater gun the propulsion of the shaft is ensured by one or more elastic elements constrained in proximity to or at the front end of the barrel.

In general, two elastic elements can be utilized, fastened with one end thereof on opposite sides of the barrel and connected to each other at the opposite end by a rigid wishbone or by a steel cable, or a single elastic element inserted in a ring fastened to the barrel and with free ends also connected by a wishbone or by a cable. In the present description the term "elastic elements" will be used in the plural form to indicate either one or other embodiment.

To load the gun, the elastic elements must be tensioned, i.e. loaded by exerting a tensile strength, and hooked in a notch or on a tab of the shaft by means of the wishbone or cable.

The shaft, provided at the free end thereof with a tip suitable to catch a fish, is held on the barrel of the gun by a releasable snap locking mechanism that can be activated by a trigger. After the elastic elements have been tensioned and hooked to the shaft, pressure on the trigger activates the mechanism that releases locking of the shaft and allows the preloaded elastic elements to throw the shaft towards the target.

One of the main problems of underwater guns powered by elastic elements is given by the difficulty in loading the elastic elements, as this operation requires the diver to manually exert considerable tensile stress on these elastic elements.

Moreover, in the instant in which the diver is exerting maximum stress, the wishbone or cable must be hooked correctly in the notch or on the tab present on the shaft. The simple hooking movement is however very difficult when the muscles are already stressed to maintain the elastic elements tensioned and this can compromise hooking to the shaft, resulting in the need to repeat the tiring operation of tensioning the elastic elements.

This problem affects all underwater guns powered by elastic elements, irrespective of the length of the barrel, but is even greater in the case of underwater guns with very long barrels (even over one meter), for which more extensive movements and efforts must be exerted.

The loaded elastic elements must possess a high elastic strength to ensure a useful range sufficient to catch the fish. In general, tubular elastic elements are used, with a diameter of between 15 and 20 mm and with "modulus" of between 250% and 300%, i.e. elongations variable from 3.5 to 4 times the length of the elastic elements in the unstretched condition. The tensile strength required to preload the elastic elements varies with elongation of the elastic elements and can even reach values of around 50-70 kg as a function of the manufacturer and of the mix utilized.

It is also appropriate to consider the fact that loading of the elastic elements in prior art underwater guns implies a considerable waste of energy and of oxygen for the diver. The resulting fatigue limits the time the diver can remain lying in wait during apnea.

Another problem with prior art underwater guns is given by their dangerousness during loading operations. In fact, failure to hook the elastic element onto the shaft or breakage of an elastic element or of the wishbone during loading of the gun, especially in the condition of maximum extension of the bands, can lead to the grip on these elastic elements from being immediately released. The wishbone drawn at high speed can also cause serious injuries and lesions to the fingers.

GR-A-90100764 discloses an underwater gun with elastic elements according to the preamble of claim 1. The gun has a lever hinged to the barrel and movable in rotation about the axis of the hinge pin between an open position, in which the elastic elements can be hooked in the unstretched condition to the shaft, and a closed position in which the elastic elements are loaded in the tension condition.

FR-A-883289 discloses an underwater gun having elastic means, such as a spring or an elastic element, for the propulsion of the shaft. The shoulder stock is hinged to barrel and can be rotated about the axis of the hinge pin to load the elastic propulsion means.

This being stated, an object of the present invention is to propose an underwater gun powered by elastic elements that facilitates the operation to tension the elastic elements, regardless of the length of the gun barrel.

Another object of the present invention is to propose an underwater gun powered by elastic elements that makes the operation to load the gun safer.

These objects are achieved according to the invention with an underwater gun powered by elastic elements having the features of claim 1. Peculiar features and possible embodiments are set forth in the respective dependent claims.

According to a first aspect of the present invention, there is proposed an underwater gun powered by elastic elements, including a barrel, one or more elastic elements, a handle and at least one locking and release mechanism of a shaft thrown from the gun under the action of one or more elastic elements previously loaded in tension, wherein the barrel includes at least two portions hinged to each other and movable in mutual rotation about the axis of the hinge pin between an open position, wherein the elastic elements can be hooked in the unstretched condition to the barrel, and a closed position, in which the elastic elements are loaded in a tension condition.

The two portions of the barrel hinged to each other facilitate loading of the elastic elements acting on these two portions of the barrel and rotating them in relation to each other to the closed position.

Moreover, the loading operation is made safer with respect to prior art guns as hooking of the wishbone or cable takes place before the elastic elements are tensioned and the gun is loaded by acting on the two portions of the barrel, without requiring to perform any manual grip on the elastic elements.

According to an advantageous aspect of the present invention, the hinge pin is disposed along the barrel at a distance, calculated starting from the front end of the barrel, of between 25% and 30% of the overall length thereof. In practice, the position of the hinge pin produces an advantageous lever to allow a noteworthy reduction in the effort exerted by the diver to tension the elastic elements.

In fact, the handle of the gun is fastened to a first of the two portions, or produced in one piece therewith, and the elastic elements are constrained to the second of the two portions at, or in proximity to, an end of the second portion.

Therefore, loading operations are particularly easy. After locking the shaft with the releasable snap mechanism, the two portions of the barrel can be rotated to the maximum open position, in which the elastic elements, in unloaded condition, can be easily hooked to the shaft through the respective wishbone (or cable). This is a considerable advantage per se, as loading of the weapon, i.e. tensioning of the elastic elements, starts from a condition in which the wishbone (or cable) is already hooked to the shaft.

Mutual rotation of the two portions of barrel to the closed position allows the elastic elements to be stretched applying a much lower force with respect to that required to stretch the bands manually with a linear movement.

Upon reaching the closed position, the two portions of the barrel are mutually aligned along the same axis and are coupled to form the barrel of the gun. The tension of the elastic elements facilitates maintenance of this position between the two portions, but means can also be provided to guarantee releasable locking between the two portions in the closed position, i.e. releasable snap locking means or the like.

According to a possible embodiment of the present invention, the barrel can include three portions and a pair of hinge pins: a first portion and a second portion are mutually rotatable about the axis of a first hinge pin; in turn the second portion and a third portion are mutually rotatable about the axis of a second hinge pin.

According to another possible embodiment of the present invention, the barrel can include a main body and a heading element fastenable to the main body. In this embodiment, a first of the at least two portions is constituted by the main body and by a part of the heading element, while a second of the at least two portions is hinged to the heading element and rotatable with respect to the axis of a hinge pin disposed on the heading element.

This particular embodiment allows the present invention also to be applied to pre-existing guns powered by elastic elements. Moreover, the two parts of which an underwater gun thus produced and/or modified is composed, i.e. a main body and a heading element, can also be disassembled and put away after use, occupying less space.

It must also be pointed out that loading of the underwater gun according to the present invention can be performed easily maintaining a balanced position in the water, with torso erect and arms spread apart and moved towards each other during loading, exerting a moderate "finning" action. This is advantageous not only with regard to facilitating loading operations, but also from the viewpoint of safety. On the contrary, with prior art guns it is necessary to rest the handle against the torso, maintain the arms initially outstretched and then pull the elastic elements toward the torso to the hooking point on the shaft, movements which can compromise correct balance in the water or which in any case require considerable "finning" to maintain this balance.

Further characteristics and advantages of the present invention will be more apparent from the following description, provided purely by way of a non-limiting example with reference to the appended drawings, wherein:
- Figures 1 to 4 are schematic views showing loading of an underwater gun powered by elastic elements according to the present invention;
- Figure 5 is a perspective view of a possible embodiment of the underwater gun powered by elastic elements according to the present invention with the two portions of the barrel in the maximum open position;
- Figure 6 is a perspective view showing the underwater gun powered by elastic elements in Figure 5 in an intermediate step of loading with the elastic elements tensioned;
- Figure 7 is a perspective view showing the underwater gun powered by elastic elements in Figure 5 with the two portions of the barrel in the closed position;
- Figure 8 is a schematic view showing another embodiment of an underwater gun powered by elastic elements according to the present invention;
- Figure 9 is a schematic view showing a detail of a possible embodiment of the underwater gun powered by elastic elements according to the present invention; and
- Figure 10 is a schematic view showing a further embodiment of an underwater gun powered by elastic elements according to the present invention.

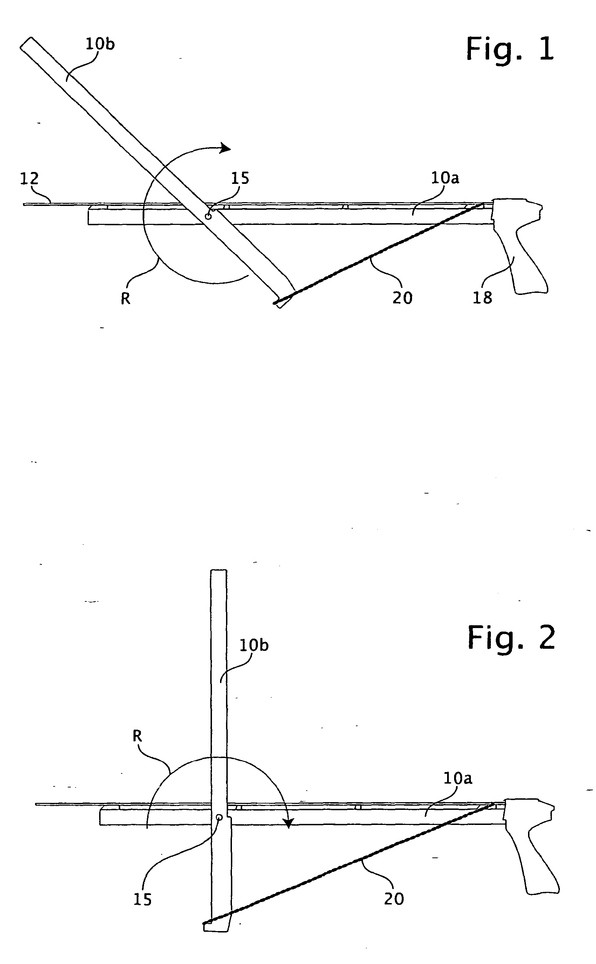

The underwater gun powered by elastic elements represented schematically in Figure 1 has a barrel including two portions 10a and 10b hinged to each other at a hinge pin 15. Both portions of barrel 10a and 10b can be produced with materials generally utilized for this type of gun, such as wood, aluminium and alloys thereof, carbon fiber or the like.

A handle 18 is fastened to the portion of barrel 10a and is provided with a releasable snap mechanism (not shown), activatable via a trigger, that allows locking and release of a shaft 12. The handle 18 can also be produced in one piece with this portion of barrel 10a.

The portion of barrel 10b includes one or more elastic elements 20 constrained at or in proximity to an end thereof.

The portions of barrel 10a and 10b are mutually movable in rotation about the axis of the hinge pin 15 to facilitate tensioning of the elastic elements 20.

In fact, in the maximum open position represented in Figure 1, the elastic elements 20 are in the unstretched position, i.e. they are not subject to any tension, and can be easily hooked with the respective wishbone or cable in a notch or to a tab of the shaft 12 after having locked this shaft in the releasable snap mechanism incorporated in the handle 18.

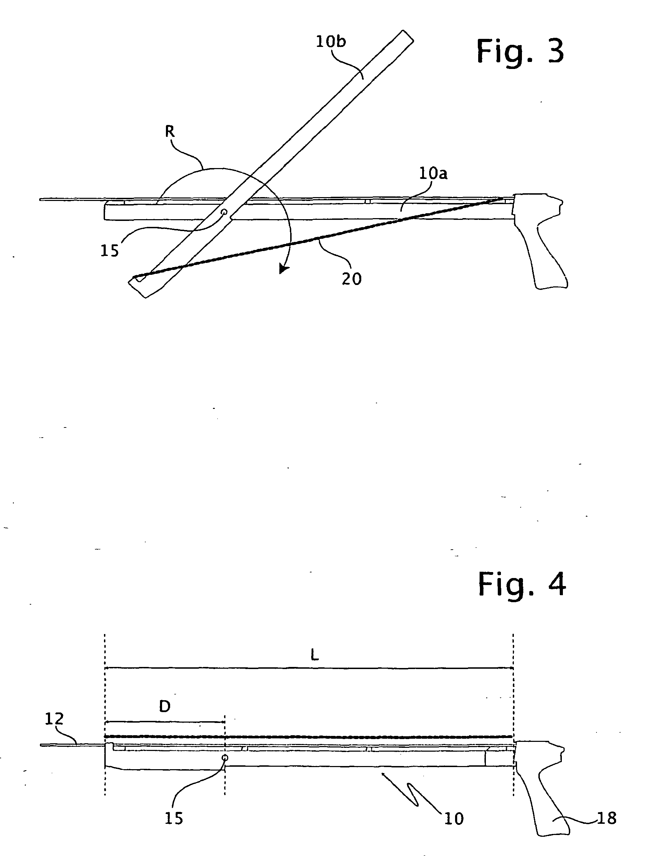

Then, rotating the portion of barrel 10b with respect to the portion of barrel 10a in the direction of the arrow R, the elastic elements 20 are gradually tensioned (Figures 2 and 3) to take the two portions of barrel 10a and 10b to the closed position (Figure 4), in which the portions 10a and 10b are aligned along a same axis, parallel to that of the shaft 12, to form the barrel 10 of the gun.

It can be noted that, unlike prior art underwater guns, the greatest effort is exerted in the initial loading steps (i.e. those represented in Figures 1 and 2), while in the final steps (i.e. the one represented in Figure 3) the effort is considerably reduced. Loading is then performed without requiring excessive effort by the diver as an extremely advantageous lever is utilized. In fact, with reference in particular to Figure 4, the hinge pin 15 is disposed along the barrel 10 ad a distance D, calculated starting from the front end of the barrel 10, of between 25% and 30% of the nominal length L thereof. Nominal length L of an underwater gun powered by elastic elements is intended here as the length measured from the front end of the barrel 10 to the point in which the shaft 12 engages in the releasable snap mechanism. In practice, the effort to tension the elastic elements is thus considerably reduced by three or four times with respect to the effort required to load prior art guns.

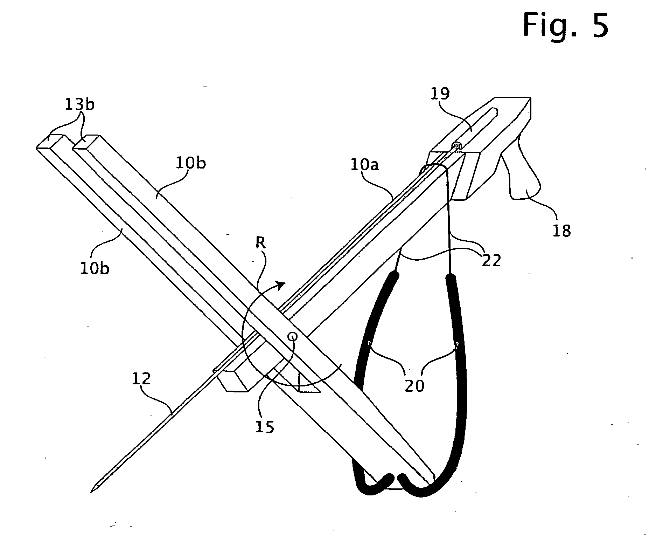

Figures 5 to 7 show a possible embodiment of an underwater gun according to the invention.

In particular, in Figure 5 the underwater gun is represented with the two portions of barrel 10a and 10b in a position in which the elastic elements are in the unstretched condition, substantially corresponding to the condition of the schematic representation in Figure 1.

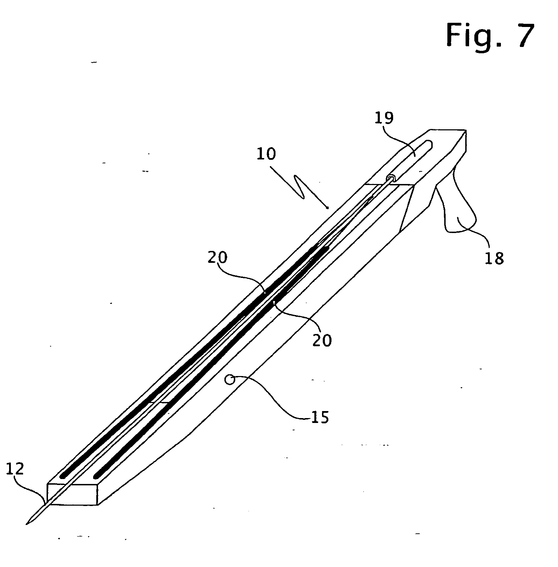

As it can be seen, the portion of barrel 10b includes two parallel arms that move adjacent to the portion of barrel 10b rotating about the hinge pin 15. The ends 13b of the arms that constitute the portion of barrel 10b are inclined in such a way as to couple against corresponding inclined surfaces 13a of the portion of barrel 10a when the portions of barrel are taken to the closed position (Figure 7).

In the embodiment represented here, the ends of the elastic elements 20 (or of the single elastic element 20) are connected to each other by means of a flexible cable 22, for example made of steel, that allows hooking thereof in a notch or to a tab of the shaft 12. This shaft is locked and held in place by the releasable snap mechanism 19 during the step to load the gun.

When the portions of barrel 10a and 10b are in the position of Figure 5, the elastic elements 20 are in the unstretched condition and the cable 22 can easily be hooked in the corresponding notch or tab present on the shaft 12.

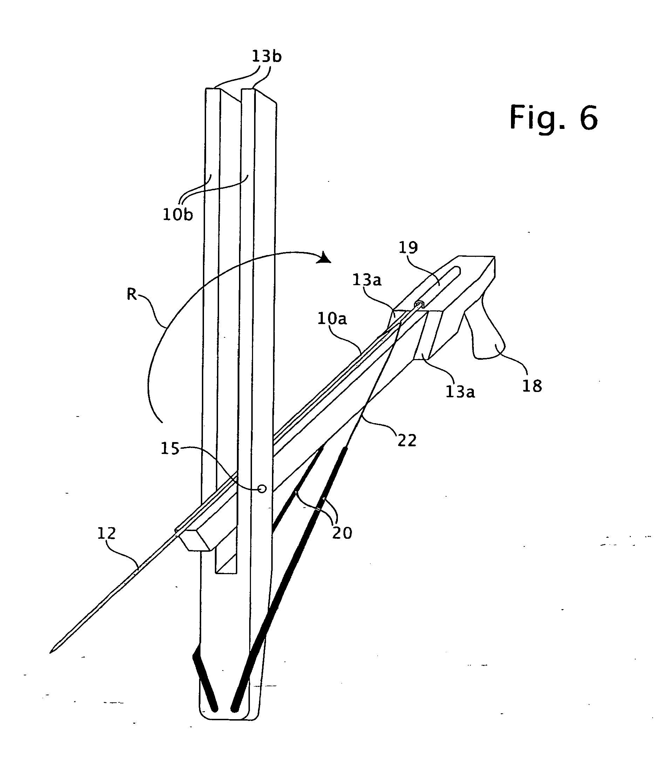

Rotating the portion of barrel 10b with respect to the portion of barrel 10a in the direction indicated by the arrow R, the elastic elements start to stretch, as for example shown in the position in Figure 6, in which the two portions of barrel are orthogonal to each other, as also already shown in the schematic view of Figure 2. Continuing rotation in the direction of the arrow R, the closed position is reached (Figure 7), in which the two portions of barrel 10a and 10b are aligned to form the barrel 10 and the elastic elements 20 have reached correct tensioning thereof.

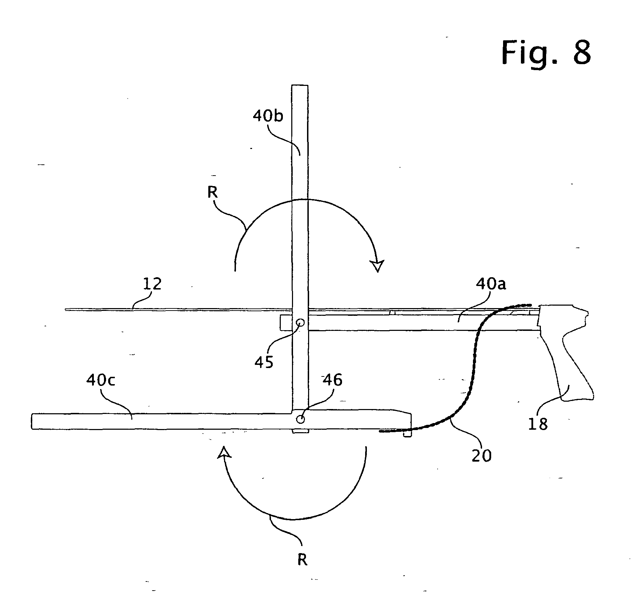

Figure 8 schematically shows another possible embodiment of an underwater gun according to the present invention, in which three portions of barrel 40a, 40b and 40c and a pair of hinge pins 45 and 46, are provided. This embodiment can be suitable above all for underwater guns with barrels of high nominal length, i.e. lengths of over one meter.

The handle 18 is fastened to the first portion of barrel 40a, or alternatively it can be produced in one piece with this portion 40a.

The second portion 40b is movable in rotation with respect to the portion of barrel 40a about the axis of a first hinge pin 45, while the third portion of barrel 40c is in turn movable in rotation with respect to the portion of barrel 40b about the axis of a second hinge pin 46. The elastic elements 20 are constrained at the end of the portion 40c.

Loading of the underwater gun is performed starting from the position in Figure 8, in which the shaft 12 is locked in the relative releasable snap mechanism disposed at the handle 18 and the elastic elements 20 are in the unstretched condition.

From this position, the portions of barrel 40b and 40c are rotated successively in the direction indicated by the arrows R about the respective hinge pins 45 and 46 to take the three portions of barrel 40a, 40b and 40c to the closed position, i.e. to the position in which a condition of alignment of the three portions of barrel along the same axis is obtained, and in which the elastic elements 20 are loaded with the correct degree of tensioning.

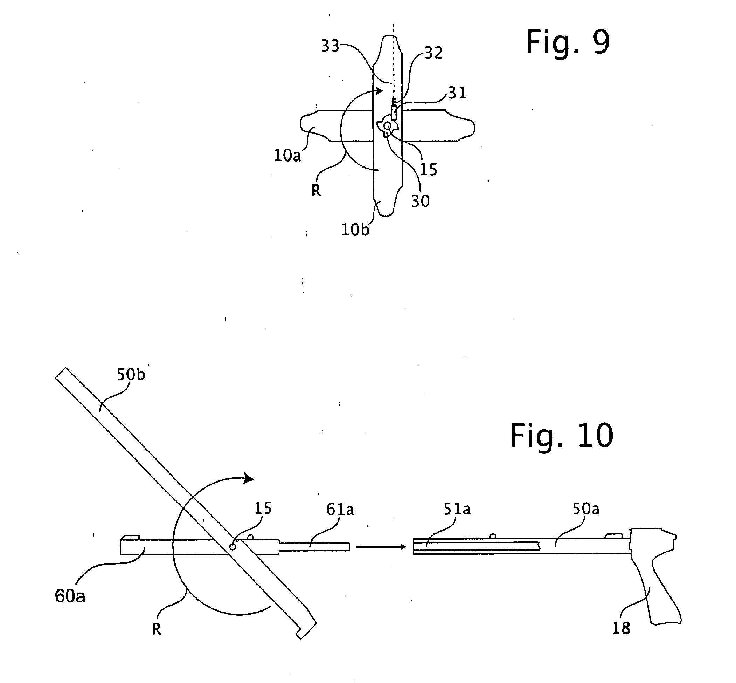

Also in this case, regardless of the order in which rotation of the portions 40b and 40c is performed, the hinge pins 45 and 46 are disposed in a position in which an advantageous lever is always utilized during tensioning of the elastic elements 20. Figure 9 shows a detail of an embodiment of the present invention in which a mechanism is provided to stop reverse rotation between two portions of barrel 10a and 10b.

The mechanism is constituted by a cogwheel 30 fastened integral with a hinge pin 15 and a stop element 31 mounted on the portion of barrel 10b and movable in translation with respect thereto. A spring 32 biases the stop element to abut against the lateral surface of the cogwheel 30.

The cogwheel 30 has a plurality of cogs each having a curved part of lateral surface and a flat part of lateral surface. In practice, the cogs are shaped in such a way as to allow the stop element 31 to slide along the curved part of surface when rotation is performed in the loading direction of the gun indicated by the arrow R. Upon exceeding the curved part of surface of a cog of the wheel 30, the stop element returns to the position resting against the flat surface of this cog under the action of the spring 32, to prevent reverse rotation with respect to the loading direction.

The action of the stop element 31 can in any case be disabled by acting on a cable 33 when it is necessary to return to the maximum open condition between the two portions of barrel 10a and 10b to start a new step to tension the elastic elements.

The number of cogs of the cogwheel 30 can also differ from that represented here as a function of the number of stop positions that may be deemed suitable for a particular gun. In the same way, although the stop mechanism is illustrated with reference to the embodiment in Figures 1 to 7, it is evident that this mechanism can also be advantageously utilized for the embodiment in Figure 8, associating it with one or with both of the hinge pins 45 and 46.

In the further embodiment shown in Figure 10, the barrel of the underwater gun includes a main body 50a to which the handle 18 is fastened or, alternatively, the handle is produced in one piece with the main body 50a.

The main body 50a is arranged to receive a heading element 60a, for example by inserting a mounting portion 61 a of the heading element 60a in a corresponding cavity 51a of the main body 50a. In this case removable fastening means, such as screws, pins or the like, can be provided to allow mounting and removal of the heading element 60a with respect to the main body 50a.

In this embodiment, the first portion of barrel is constituted by joining the main body 50a and a part of the heading element 60a when they are in assembled condition. The second portion of barrel 50b is hinged to the heading element 60a and is rotatable with respect to the axis of the hinge pin 15 disposed on said heading element 60a. Once the heading element 60a and the main body 50a are assembled, the operations to load the underwater gun of this embodiment are identical to those already described for the embodiments in Figures 1 to 7.

The heading element 60a can also be coupled to a main body 50a of an existing underwater gun offering various advantages. For example, the two parts can be disassembled and put away after use, occupying less space. Moreover, this could also allow underwater guns powered by elastic elements of different lengths to be formed utilizing a single main body 50 and heading elements having different lengths from one another.

The same principle can also be applied to the embodiment in Figure 8, with the second and the third portion of barrel 40b and 40c belonging to a heading element, together with the relative hinge pins 45 and 46, and a first portion of barrel 40a constituted in part by the main body of the gun and by a part of the heading element. Various modifications can be made to the various embodiments represented here without departing from the scope of the present invention. For example, means can be provided to releasably lock the coupling between the two or three portions of barrel, for example releasable snap locking means, elastically deformable couplings or the like.

Several elastic elements of different lengths or characteristics can also be mounted simultaneously on a same gun, even if utilized in mutual exclusion, as occurs in some cases of prior art underwater guns, without in any way modifying the solution proposed by the present invention for tensioning of the elastic elements.

Moreover, the portions of barrel can be provided with a plurality of transverse holes that can be engaged selectively by a respective hinge pin to vary the position thereof with respect to the end of the barrel of the gun, for example to adapt it for operation powered by elastic elements of different lengths or characteristics.

## Claims

1. An underwater gun with elastic elements, including a barrel (10), one or more elastic elements (20), a handle (18) and at least one locking and release mechanism (19) of a shaft (12) thrown from the gun under the action of said one or more elastic elements (20) previously loaded in tension, wherein said barrel (10) includes at least two portions (10a, 10b) hinged to each other and movable in mutual rotation about the axis of the hinge pin (15) between an open position, in which said one or more elastic elements (20) can be hooked in the unstretched condition to said shaft (12), and a closed position, in which said one or more elastic elements (20) are loaded in the tension condition, **characterized in that** said at least two portions (10a, 10b) are coupled to form the barrel of the gun when they are in said closed position.

2. The underwater gun as claimed in claim 1, wherein said barrel includes three portions (40a, 40b, 40c) and a pair of hinge pins (45, 46), a first portion (40a) and a second portion (40b) being mutually rotatable about the axis of a first hinge pin (45), said second portion (40b) and a third portion (40c) being mutually rotatable about the axis of a second hinge pin (46).

3. The underwater gun as claimed in claim 1 or 2, wherein said two or three portions are mutually aligned along the same axis when they are in said closed position.

4. The underwater gun as claimed in claim 1, wherein said handle (18) is fastened to a first (10a) of said at least two portions or produced in one piece therewith, and wherein said one or more elastic elements (20) are constrained to a second (10b) of said at least two portions.

5. The underwater gun as claimed in claim 4, wherein said one or more elastic elements (20) are constrained at or in proximity to an end of said second portion (10b).

6. The underwater gun as claimed in claim 2, wherein said handle (18) is fastened to a first (40a) of said at least two portions or produced in one piece therewith, and wherein said one or more elastic elements (20) are constrained to said third portion (40c).

7. The underwater gun as claimed in claim 6, wherein said one or more elastic elements (20) are constrained at or in proximity to an end of said third portion (40c).

8. The underwater gun as claimed in claim 1, wherein said hinge pin (15) is disposed along said barrel (10) at a distance, calculated starting from the front end of the barrel, of between 25% and 30% of the nominal length thereof.

9. The underwater gun as claimed in claim 1, wherein the angle of rotation between said open position and said closed position is greater than 90°.

10. The underwater gun as claimed in claim 1, wherein a mechanism (30, 31, 32) is provided to stop reverse rotation activatable during the movement of said at least two hinged portions (10a, 10b) from said open position to said closed position, and deactivatable with a control during the movement of said at least two hinged portions (10a, 10b) from said closed position to said open position.

11. The underwater gun as claimed in claim 2, wherein two mechanisms (30, 31, 32) are provided to stop reverse rotation activatable during the rotation movement between said hinged portions (40a, 40b, 40c) from said open position to said closed position, and deactivatable with a control during the rotation movement of said three hinged portions from said closed position to said open position.

12. The underwater gun as claimed in claim 1, wherein said barrel includes a main body (50a) and a heading element (60a) fastenable to said main body, and wherein a first of said at least two portions is constituted by said main body and by a part of said heading element, and a second (50b) of said at least two portions is hinged to said heading element (60a) and rotatable with respect to the axis of a hinge pin (15) disposed on said heading element (60a).

13. The underwater gun as claimed in claim 2, wherein said barrel includes a main body and a heading element fastenable to said main body, and wherein a first of said three portions is constituted by said main body and by a part of said heading element, a second of said three portions is hinged to said heading element and mutually rotatable with respect to the axis of a first hinge pin disposed on said heading element, and a third of said three portions is hinged to said second portion and mutually rotatable with respect to the axis of a second hinge pin.

## Patentansprüche

1. Unterwasserharpune mit elastischen Elementen, umfassend einen Lauf (10), ein oder mehrere elastische Elemente (20), einen Griff (18) und wenigstens einen Verriegelungs- und Auslösemechanismus (19) eines Pfeils (12), der von der Harpune unter Einwirkung der vorhergehend unter Spannung geladenen elastischen Elemente (20) abgeworfen wird, wobei der Lauf (10) wenigstens zwei Teile (10a, 10b) umfasst, die miteinander gelenkig verbunden sind und gegeneinander um die Achse eines Gelenkzapfens (15) bewegbar sind, zwischen einer geöffneten Stellung, in welcher eines oder mehrere elastische Elemente (20) in ungespanntem Zustand in den Pfeil (12) eingehängt werden können, und einer geschlossenen Stellung, in welcher die ein oder mehreren elastischen Elemente (20) in den gespannten Zustand geladen werden, **dadurch gekennzeichnet, dass** die wenigstens zwei Teile (10a, 10b) so miteinander verbunden sind, dass sie den Lauf der Harpune bilden, wenn diese sich in der geschlossenen Stellung befinden.

2. Unterwasserharpune nach Anspruch 1, bei welcher der Lauf drei Teile (40a, 40b, 40c) und ein Paar Gelenkzapfen (45, 46) umfasst, wobei ein erstes Teil (40a) und ein zweites Teil (40b) gegeneinander um die Achse eines ersten Gelenkzapfens (45) drehbar sind und das zweite Teil (40b) und ein drittes Teil (40c) gegeneinander um die Achse eines zweiten Gelenkzapfens (46) drehbar sind.

3. Unterwasserharpune nach einem der Ansprüche 1 oder 2, bei welchem die zwei oder die drei Teile zueinander in der geschlossenen Stellung entlang der gleichen Achse ausgerichtet sind.

4. Unterwasserharpune nach Anspruch 1, bei welcher der Griff (18) an einem ersten (10a) der wenigstens beiden Teile befestigt ist oder einstückig mit diesem ausgebildet ist, und bei welcher das eine oder mehrere elastische Elemente (20) in einem zweiten (10b) der wenigstens beiden Teile verlegt sind.

5. Unterwasserharpune nach Anspruch 4, bei welcher das eine oder die mehreren elastischen Elemente (20) an dem Ende oder in der Nähe des Endes des zweiten Teils (10b) verlegt sind.

6. Unterwasserharpune nach Anspruch 2, bei welcher der Griff (18) an einem ersten (40a) der wenigstens beiden Teile befestigt ist oder mit diesem einstückig ausgebildet ist und bei welchem das eine oder die mehreren elastischen Elemente (20) in dem dritten Teil (40c) verlegt sind.

7. Unterwasserharpune nach Anspruch 6, bei welcher das eine oder die mehreren elastischen Elemente (20) an oder in der Nähe eines Endes des dritten Teils (40c) verlegt sind.

8. Unterwasserharpune nach Anspruch 1, bei welcher der Gelenkzapfen (15) an dem Lauf (10) in einem Abstand vorgesehen ist, der beginnend von dem vorderen Ende des Laufs zwischen 25 % und 30 % der nominalen Länge des Laufs beträgt.

9. Unterwasserharpune nach Anspruch 1, bei welcher der Drehwinkel zwischen der geöffneten und der geschlossenen Stellung mehr als 90° beträgt.

10. Unterwasserharpune nach Anspruch 1, welche einen Mechanismus (30, 31, 32) umfasst, der zur Blockierung einer Rückwärtsdrehung vorgesehen ist, welcher während der Bewegung der wenigstens zwei gelenkig miteinander verbundenen Teile (10a, 10b) von der geöffneten Stellung in die geschlossene Stellung aktivierbar ist und welcher mit einer Steuerung während der Bewegung der beiden gelenkig miteinander verbundenen Teile (10a, 10b) von der geschlossenen in die geöffnete Stellung deaktivierbar ist.

11. Unterwasserharpune nach Anspruch 2, bei welcher zwei Mechanismen (30, 31, 32) zur Blockierung einer Rückwärtsbewegung vorgesehen sind, die während der Drehbewegung zwischen den gelenkig verbundenen Teilen (40a, 40b, 40c) von der geöffneten Stellung in die geschlossene Stellung aktivierbar ist und mit einer Steuerung während der Drehbewegung der drei gelenkig miteinander verbundenen Teilen von der geschlossenen Stellung in die geöffnete Stellung deaktivierbar sind.

12. Unterwasserharpune nach Anspruch 1, bei welcher der Lauf einen Grundkörper (50a) und ein führendes Element (60a) umfasst, welches an dem Grundkörper befestigbar ist und bei welchem ein erstes der wenigstens beiden Teile durch den Grundkörper und durch einen Teil des führenden Elements gebildet wird und ein zweites (50b) der wenigstens beiden Teile an das führende Element (60a) angelenkt ist und bezüglich der Achse des Gelenkzapfens (15), welche auf dem führenden Element (60a) angeordnet ist, drehbar ist.

13. Unterwasserharpune nach Anspruch 2, bei welchem der Lauf einen Grundkörper und ein an dem Grundkörper befestigbares führendes Element umfasst und wobei ein erstes der drei Teile durch den Grundkörper und ein Teil des führenden Elements gebildet wird, ein zweites der drei Teile an das führende Element angelenkt ist und diese gegeneinander bezüglich der Achse eines ersten Gelenkzapfens an dem führenden Element drehbar sind, und ein drittes der drei Teile an das zweite Teil angelenkt ist und diese bezüglich der Achse eines zweiten Gelenkzapfens gegeneinander drehbar sind.

## Revendications

1. Fusil sous-marin ayant des éléments élastiques, comprenant un canon (10), un ou plusieurs éléments élastiques (20), une poignée (18) et au moins un mécanisme de verrouillage et de déverrouillage (19) d'un arbre (12) projeté depuis le fusil sous l'action dudit ou desdits éléments élastiques (20) préalablement chargés en tension, dans lequel ledit canon (10) comprend au moins deux parties (10a, 10b) articulées l'une à l'autre et mobiles en rotation mutuelle autour de l'axe de la tige d'articulation (15) entre une position ouverte, dans laquelle ledit ou lesdits éléments élastiques (20) peuvent être accrochés dans la condition non étirée audit arbre (12), et une position fermée, dans laquelle ledit ou lesdits éléments élastiques (20) sont chargés dans la condition de tension, **caractérisé en ce que** lesdites au moins deux parties (10a, 10b) sont couplées pour former le canon du fusil lorsqu'ils sont dans ladite position fermée.

2. Fusil sous-marin selon la revendication 1, dans lequel ledit canon comprend trois parties (40a, 40b, 40c) et une paire de tiges d'articulation (45, 46), une première partie (40a) et une deuxième partie (40b) étant mutuellement rotatives autour de l'axe d'une première tige d'articulation (45), ladite deuxième partie (40b) et une troisième partie (40c) étant mutuellement rotatives autour de l'axe d'une deuxième tige d'articulation (46).

3. Fusil sous-marin selon la revendication 1 ou 2, dans lequel lesdites deux ou trois parties sont mutuellement alignées le long du même axe lorsqu'elles sont dans ladite position fermée.

4. Fusil sous-marin selon la revendication 1, dans lequel ladite poignée (18) est fixée à une première (10a) desdites au moins deux parties ou réalisée d'un seul tenant avec celle-ci, et dans lequel ledit ou lesdits éléments élastiques (20) sont contraints sur une deuxième (10b) desdites au moins deux parties.

5. Fusil sous-marin selon la revendication 4, dans lequel ledit ou lesdits éléments élastiques (20) sont contraints au niveau de ou à proximité d'une extrémité de ladite deuxième partie (10b).

6. Fusil sous-marin selon la revendication 2, dans lequel ladite poignée (18) est fixée à une première (40a) desdites au moins deux parties ou réalisée d'un seul tenant avec celle-ci, et dans lequel ledit ou lesdits éléments élastiques (20) sont contraints sur ladite troisième partie (40c).

7. Fusil sous-marin selon la revendication 6, dans lequel ledit ou lesdits éléments élastiques (20) sont contraints au niveau de ou à proximité d'une extrémité de ladite troisième partie (40c).

8. Fusil sous-marin selon la revendication 1, dans lequel ladite tige d'articulation (15) est disposée le long dudit canon (10) à une distance, calculée à partir de l'extrémité avant du canon, située entre 25 % et 30 % de la longueur nominale de celui-ci.

9. Fusil sous-marin selon la revendication 1, dans lequel l'angle de rotation entre ladite position ouverte et ladite position fermée est supérieur à 90°.

10. Fusil sous-marin selon la revendication 1, dans lequel un mécanisme (30, 31, 32) est pourvu pour arrêter la rotation inverse, activable pendant le mouvement desdites au moins deux parties articulées (10a, 10b) depuis ladite position ouverte vers ladite position fermée, et désactivable avec une commande pendant le mouvement desdites au moins deux parties articulées (10a, 10b) depuis ladite position fermée vers ladite position ouverte.

11. Fusil sous-marin selon la revendication 2, dans lequel deux mécanismes (30, 31, 32) sont pourvus pour arrêter la rotation inverse, activables pendant le mouvement de rotation entre lesdites parties articulées (40a, 40b, 40c) depuis ladite position ouverte vers ladite position fermée, et désactivables avec une commande pendant le mouvement de rotation desdites trois parties articulées depuis ladite position fermée vers ladite position ouverte.

12. Fusil sous-marin selon la revendication 1, dans lequel ledit canon comprend un corps principal (50a) et un élément de tête (60a) pouvant être fixé audit corps principal, et dans lequel une première desdites au moins deux parties est constituée par ledit corps principal et par une partie dudit élément de tête, et une deuxième (50b) desdites au moins deux parties est articulée audit élément de tête (60a) et rotative par rapport à l'axe d'une tige d'articulation (15) disposée sur ledit élément de tête (60a).

13. Fusil sous-marin selon la revendication 2, dans lequel ledit canon comprend un corps principal et un élément de tête pouvant être fixé audit corps principal, et dans lequel une première desdites trois parties est constituée par ledit corps principal et par une partie dudit élément de tête, une deuxième desdites trois parties est articulée audit élément de tête et mutuellement rotative par rapport à l'axe d'une première tige d'articulation disposée sur ledit élément de tête, et une troisième desdites trois parties est articulée à ladite deuxième partie et mutuellement rotative par rapport à l'axe d'une deuxième tige d'articulation.
